Europäisches Patentamt

European Patent Office

Office européen des brevets

(11) Publication number: **0 093 814**
**A1**

(12) **EUROPEAN PATENT APPLICATION**

(21) Application number: 82304052.2

(51) Int. Cl.³: **B 62 D 33/04**

(22) Date of filing: 30.07.82

(30) Priority: 26.04.82 GB 8211973

(71) Applicant: **CARMANS TRANSPORT LIMITED, Scholar Green, Stoke-on-Trent, ST7 3QH (GB)**

(72) Inventor: **Carman, William Douglas Ronald, Rosecroft Church Lane Scholar Green, Stoke-on-Trent Staffordshire (GB)**

(43) Date of publication of application: 16.11.83
Bulletin 83/46

(74) Representative: **Massey, Alexander et al, MARKS & CLERK Scottish Life House Bridge Street, Manchester, M3 3DP (GB)**

(84) Designated Contracting States: **BE DE FR GB NL**

(54) **Cargo transporting vehicles and containers.**

(57) A cargo transporting vehicle (10) has a main cargo supporting deck (11) above which is disposed a removable secondary deck (25) which may be of more than one level. This secondary deck is preferably constituted by deck elements (26) which can move over rolling elements (23) mounted in tracks (18) secured to the sides of the cargo receiving space. Alternatively the deck elements are supported on height adjustable shelves or similar.

The secondary deck (25) may be of unitary construction and in this instance it may be elevated up to the roof of the vehicle when not in use.

ACTORUM AG

2.

This invention relates to cargo transporting vehicles and containers and has as its object the improved use of the cargo holding space of such vehicles and containers.

For convenience hereinafter reference will be made simply to "cargo transporting vehicles".

It is well known that in many cargo transporting situations there is a considerable waste in the amount of cargo holding space employed since it is not possible with certain cargoes to stack items one upon another and as a result there is a substantial headroom not usefully employed.

According to one aspect of the present invention there is provided a cargo transporting vehicle having, above its main cargo-supporting deck, a secondary cargo-supporting deck which is preferably height adjustable and which may consist of two or more levels. It will generally, however, consist of a single level.

According to another aspect of the present invention there is provided a cargo transporting vehicle having, above its main cargo-supporting deck, a secondary cargo-supporting deck which is preferably height adjustable and which, when not in use, can be elevated up to the underside of the roof of the vehicle for storage purposes.

The secondary deck is preferably constituted by a track along each side of the cargo holding space bridged by one or more deck (or platform) elements.

For ease of assembly and dismantling, and also of storage, the tracks preferably comprise two or more track lengths detachably secured together. Similarly the secondary deck per se is preferably constituted by a plurality of deck elements.

The tracks are preferably supported at the selected height (or heights) by clips releasably engageable in slots in vertically-disposed slotted support members secured to the vehicle side walls.

Alternatively, the tracks are supported upon .shelves or similar adapted releasably to engage at predetermined heights in vertical channel members secured to the vehicle sides. With this construction, the shelves or similar, when not in use, can be pivoted into the channels out of the way.

With this construction also, the secondary deck is preferably of unitary construction having, at each corner, means such, for example, as a worm-and-nut arrangement, a screw jack or a chain or cable-and-pulley arrangement whereby the secondary deck can be elevated. from its in-use position to an out-of-use stowed position at the vehicle roof.

Clamps may be provided to secure the deck elements to the tracks, or, where the supporting shelves or similar are employed, to secure the deck to the tracks and shelves or similar or simply to the shelves or similar.

4.

Embodiments of the present invention will now be described, by way of example, with reference to the accompanying drawings, in which:-

Fig. 1 is a diagrammatic perspective view of a cargo-transporting vehicle according to the invention;

Fig. 2 is a fragmentary perspective view of a vertical support member and track;

Fig. 3 is a fragmentary perspective view of the track showing a clip;

Fig. 4 is a fragmentary perspective view of the tracks and secondary deck with detailed views of a clamp and alternative deck-locating member; and

Fig. 5 is a diagrammatic perspective view of an alternative cargo transporting vehicle.

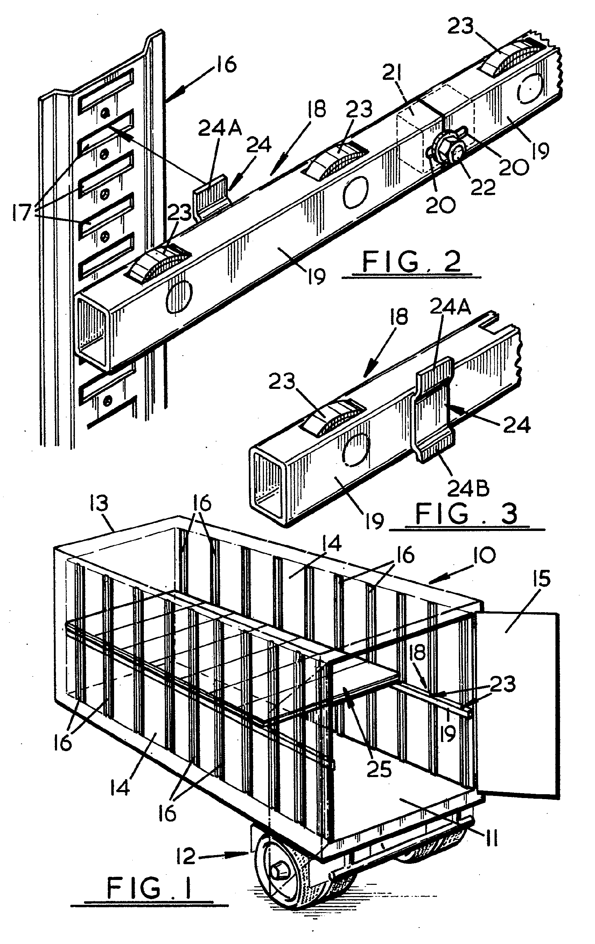

Referring to Figs. 1 to 4, the cargo transporting vehicle 10 comprises the usual cargo supporting deck 11 mounted on a wheeled chassis 12, vertical front wall 13 and vertical side walls 14 and a roof (not shown), all of which define the vehicle cargo carrying space.

The open rear of the vehicle is closable by doors 15.

According to this invention, there is secured to the side walls 14 at equi-spaced intervals vertical support members 16 of flat channel configuration and formed with a series of horizontal slots 17.

5.

A track 18 is detachably securable to each side wall 14 through the intermediary of these vertical support members 16. The track 18 is constituted by a number of track lengths 19 (say 8 foot lengths) detachably coupled together. In this embodiment, each track length 19 is of RHS section as shown slotted as indicated at 20 at a connecting end, the track lengths being secured together by an internal RHS section block 21 mounting a clamping bolt and nut 22. It will be manifest from Fig. 2 how adjacent track lengths 19 can be easily connected together and disconnected.

Each track length 19 rotatably mounts a number of wheels or rollers 23, which extend above the top of the track length 19 as shown, and has welded to it a clip 24 with upper and lower extensions 24A and 24B.

The assembled track lengths 19 defining a track 18 are secured at the desired height above the deck 11 simply by inserting the upper extensions 23A into the appropriate slots 17 and then dropping the lower extensions 23B into lower slots 17.

The two tracks 18 are now disposed at the desired height above the deck 11.

The secondary deck 25 comprises a number of deck elements 26, each constituted by a framework 27 covered by a deck sheet 28. A flange 29 depends from the deck element 26 at each side.

6.

To assemble the secondary deck 25, each deck element 2 is simply pushed along the track 18, the rollers 23 facilitating this movement, until the full deck 25 is assembled. Flanges 29 engage on the outside of the wheels 23 and assist in locating the deck elements 26 relative to the tracks 18.

The flanges 29 may alternatively be replaced by a depending channel element 30 which engages both faces of the wheels 23 and provides an improved location of the deck elements 25 on the tracks 18.

A simple clamp 31 can be used to secure each deck element 26, at each side, to its track 18. This comprises a channel bar 32 engaging in the deck element framework 17 and under the track 18 and a clamping screw 32A, which can be screwed up against the underside of the track 18.

It will be manifest from the above that the secondary deck and associated tracks can easily and readily be assembled at any desired height in a vehicle and also dismantled if not required or if not usable due to the height of the cargo.

It can easily be broken down into its component parts so that it can be stored in a relatively limited space.

There may be more than one secondary deck provided.

The secondary deck may be assembled to provide two or more levels by arranging track lengths at different heights.

7.

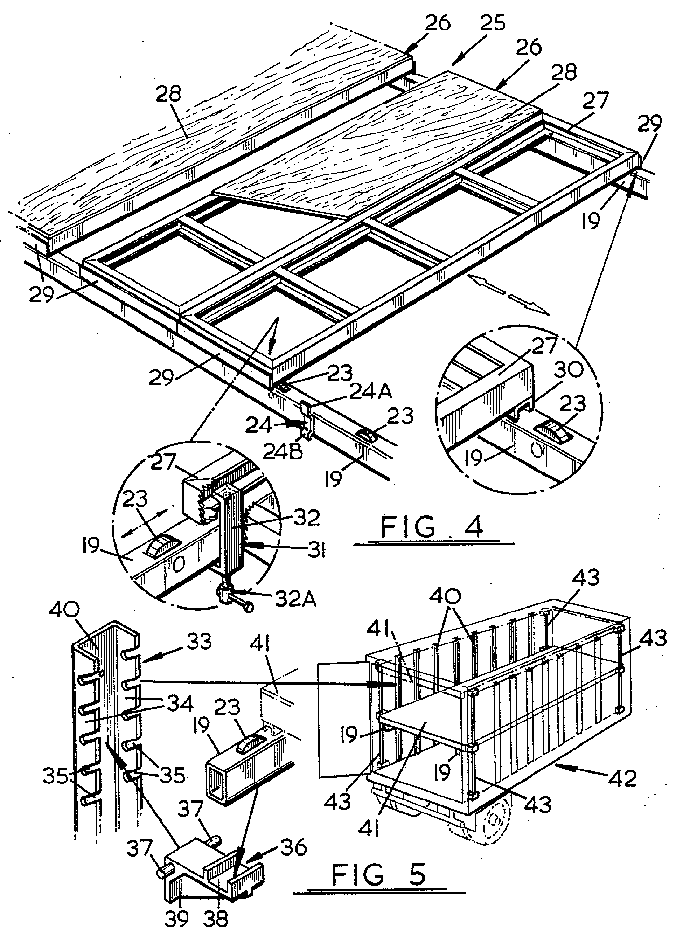

Reference is now made to Fig. 5. In this embodiment, the vertical support members are constituted by vertical channel members 33, whereof the limbs 34 are formed with downwardly inclined slots 35. The secondary deck is mounted on these channel members 33 by shelves 36 or similar comprising a pivot pin 37, a track receiving formation 38 and an abutment 39 which contacts the channel face 40 and prevents downward pivoting of the shelf 36.

The secondary deck 41 is constituted by the tracks and deck elements are described above save that clips 24 are omitted.

In this instance, each corner of the secondary deck 41 is provided with a means for elevating it up to the roof of the vehicle 42 when its use is not required. Such means may be worm-and-nut arrangements 43 as indicated suitably operably coupled together and to a convenient drive means.

Any other form of means for moving the secondary deck 41 vertically may be employed.

It will be manifest that the shelves 36 can be located at any desired height. Also, when not in use they can be pivoted into the channel members 33 out of the way.

Finally, it is to be appreciated that the secondary deck 41 could be a permanent feature and in this instance may simply be a deck of unitary construction with integral runners for resting on the shelves 36, i.e. the tracks are omitted.

8.

As an alternative to the wheels or rollers 23 load-bearing balls may be employed.

9.

CLAIMS

1. A cargo transporting vehicle comprising a main cargo-supporting deck and, above the latter, a secondary cargo-supporting deck.

2. A vehicle as claimed in Claim 1, in which the secondary cargo-supporting deck is removable.

3. A vehicle as claimed in Claim 1 or 2, in which the secondary cargo-supporting deck is height-adjustable.

4. A vehicle as claimed in Claim 3 in which the secondary cargo-supporting deck, when not in use, can be elevated up to the underside of the roof of the vehicle for storage purposes.

5. A vehicle as claimed in any one of Claims 1 to 4 in which the secondary cargo-supporting deck consists of two or more levels.

6. A vehicle as claimed in any one of Claims 1 to 5 in which the secondary cargo-supporting deck is constituted by a track along each side of the cargo holding space of the vehicle, the tracks being bridged by one or more deck elements.

7. A vehicle as claimed in Claim 6 in which each track is constituted by two or more track elements.

8. A vehicle as claimed in Claim 6 or 7 in which each track incorporates rolling elements to facilitate assembly and disassembly of the secondary cargo-supporting deck.

10.

9. A vehicle as claimed in any one of Claims 6 to 8 in which each track is supported at the selected height or heights by clips releasably engaged in slots in vertically-disposed slotted support members secured to the vehicle side walls.

10. A vehicle as claimed in any one of Claims 6 to 8, in which the tracks are supported upon shelves or similar adapted releasably to engage at predetermined heights in vertical channel members secured to the vehicle sides.

11. A vehicle as claimed in Claim 10 in which the shelves or similar are pivotally mounted so that, when not in use, they can be pivoted out of the way into the channels.

12. A vehicle as claimed in Claim 3 or 4, in which the secondary cargo-supporting deck is of unitary construction and has, at each corner, elevating means for raising the secondary cargo-supporting deck from its in-use position to an out-of-use stowed position at the vehicle roof.

13. A vehicle as claimed in any one of Claims 6 to 11 comprising clamps for securing the or each deck element to the tracks, or, where the supporting shelves or similar are employed, to secure the or each deck element to the tracks and shelves or similar or simply to the shelves or similar.

FIG. 2

FIG. 3

FIG. 1

2/2    0093814

FIG. 4

FIG 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 516 706  (BRUCE)<br>* Figures 2, 3 * | 1-5 | B 62 D  33/04 |
| X | US-A-3 367 287  (DUNLOP)<br><br>* Figures 1-5 * | 1,6,7,<br>13 | |
| A | DE-U-7 933 487  (BLUMHARDT)<br>* Figures 1, 2 * | 1,6,8 | |
| A | US-A-4 094 546  (GLASSMEYER et al.) | | |
| A | DE-A-2 734 943  (WEHMEYER) | | |
| A | DE-A-2 206 442  (BLUMHARDT) | | |

TECHNICAL FIELDS SEARCHED (Int. Cl. ³)

B 62 D  33/00

The present search report has been drawn up for all claims

| Place of search | Date of completion of the search | Examiner |
|---|---|---|
| BERLIN | 05-07-1983 | LUDWIG H J |